(19) **Europäisches Patentamt**

**European Patent Office**

**Office européen des brevets**

(11) **EP 0 727 441 B1**

(12) **EUROPÄISCHE PATENTSCHRIFT**

(45) Veröffentlichungstag und Bekanntmachung des Hinweises auf die Patenterteilung:
**03.06.1998 Patentblatt 1998/23**

(51) Int. Cl.$^6$: **C08F 2/22**, C09D 157/00, C09J 157/00

(21) Anmeldenummer: **96101647.4**

(22) Anmeldetag: **06.02.1996**

(54) **Verfahren zur Herstellung von emulgatorfreien wässrigen Polymerdispersionen**

Process for preparing aqueous polymer dispersions without emulsifier

Procédé de préparation de dispersion aqueuses de polymères sans émulsifiant

(84) Benannte Vertragsstaaten:
**AT BE CH DE ES FR GB IT LI NL SE**

(30) Priorität: **15.02.1995 DE 19505039**

(43) Veröffentlichungstag der Anmeldung:
**21.08.1996 Patentblatt 1996/34**

(73) Patentinhaber:
**BASF Aktiengesellschaft**
**67063 Ludwigshafen (DE)**

(72) Erfinder:
• **Schlarb, Bernhard, Dr,**
**D-67067 Ludwigshafen (DE)**
• **Schupp, Eberhard, Dr.**
**D-67269 Grünstadt (DE)**
• **Rau, Maria Gyopar, Dr.**
**D-67098 Bad Dürkheim (DE)**
• **Schultz, Günther, Dr.**
**D-67098 Bad Dürkheim (DE)**
• **Wiese, Harm, Dr.**
**D-69115 Heidelberg (DE)**

(56) Entgegenhaltungen:
• **CHEMICAL ABSTRACTS, vol. 101, no. 6,**
**6.August 1984 Columbus, Ohio, US; abstract no.**
**39008, Seite 12; Spalte 2; XP002010046 & JP-A-**
**59 038 207 (KAO CORP.)**

**Beschreibung**

Die Erfindung betrifft eine wäßrige Polymerdispersion, erhältlich durch radikalische Polymerisation von Monomeren in wäßriger Emulsion in Gegenwart eines einstufig hergestellten, einzelnen polymeren Schutzkolloids mit einem gewichtsmittleren Molekulargewicht $\overline{M}_w$ über 20.000, enthaltend als Aufbaukomponenten

- 5 bis 50 Gew.-% mindestens eines ethylenisch ungesättigten Monomeren mit mindestens einer Säure- oder Säureanhydridgruppe (Monomere I),
- 0,1 bis 80 Gew.-% mindestens eines (Meth)acrylsäureesters eines aliphatischen Alkohols mit mindestens 10 C-Atomen (Monomere II),
- 0 bis 94,9 Gew.-% sogenannter Hauptmonomere, ausgewählt aus $C_1$-$C_9$-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen (Monomere III) und
- 0 bis 60 Gew.-% weiterer Monomere (Monomere IV),
  wobei sich die Gewichtsangaben auf das polymere Schutzkolloid beziehen.

Verfahren der Emulsionspolymerisation werden üblicherweise in Gegenwart von niedermolekularen Emulgatoren oder Schutzkolloiden, z.B. Polyvinylalkohol, durchgeführt, um die zu polymerisierenden Monomeren zu emulgieren und die erhaltenen Polymeren in der dispersen Phase zu stabilisieren. Die verwendeten hydrophilen Hilfsstoffe verschlechtern jedoch im allgemeinen die Wasserbeständigkeit der aus den Polymerdispersionen hergestellten Filme.

Eine verbesserte Wasserbeständigkeit kann erreicht werden durch Verwendung polymerer Schutzkolloide, z.B. Polyacrylaten mit einem hohen Gehalt an hydrophilen Gruppen wie (Meth)acrylsäure. Entsprechende Polymerdispersionen sind z.B. in US-A 4 151 143 und EP-A 173 300 beschrieben.

In EP-A 320 865 wird als Schutzkolloid ein Gemisch zweier Lösungscopolymerisate eingesetzt.

Aus EP-A-597 567 ist die Verwendung von Schutzkolloiden mit Molgewichten $\overline{M}_w$ unter 15.000 zur Herstellung großer bzw. speziell geformter Polymerteilchen durch Emulsionspolymerisation bekannt.

Die Wasserbeständigkeit der mit den bisher bekannten polymeren Schutzkolloiden hergestellten Polymerdispersionen ist noch nicht ausreichend.

Weiterhin führt die Verwendung der bisher bekannten polymeren Schutzkolloide zu Dispersionen mit zu grobteiligen Teilchen und unerwünschter Koagulatbildung.

Aufgabe der vorliegenden Erfindung waren daher Polymerdispersionen mit feinteiligen dispersen Polymerteilchen und möglichst wenig Koagulatbildung.

Des weiteren sollen die mit den Polymerdispersionen hergestellten Beschichtungen gute anwendungstechnische Eigenschaften aufweisen, insbesondere ist eine hohe Wasserbeständigkeit, d.h. eine geringe Wasseraufnahme, und ein hoher Glanz erwünscht.

Demgemäß wurde die eingangs definierte wäßrige Polymerdispersion gefunden. Gefunden wurde auch ein Verfahren zur Herstellung der Polymerdispersion und ihre Verwendung als bzw. in Beschichtungsmittel, Imprägnierungsmittel oder Klebstoffe.

Die folgenden Ausführungen betreffen bevorzugte Ausführungen der Erfindung.

Der Anteil der Monomeren I beträgt insbesondere 10 bis 40 Gew.-%, ganz besonders 10 bis 30 Gew.-%, und der Anteil der Monomeren II insbesondere 1 bis 50 Gew.-%, ganz besonders 10 bis 30 Gew.-%.

Das polymere Schutzkolloid enthält insgesamt als Aufbaukomponenten vorzugsweise 10 bis 40 Gew.-%, der Monomeren I, 1 bis 50 Gew.-% der Monomeren II, 20 bis 89 Gew.-% der Monomeren III und 0 bis 60 Gew.-% der Monomeren IV.

Besonders bevorzugt enthält das polymere Schutzkolloid 10 bis 30 Gew.-% der Monomeren I, 10 bis 30 Gew.-% der Monomeren II, 40 bis 80 Gew.-% der Monomeren III und 0 bis 40 Gew.-% der Monomeren IV.

Die Gewichtsangaben sind jeweils auf das polymere Schutzkolloid bezogen.

Geeignete Monomere I sind insbesondere solche mit mindestens einer Carbonsäure- oder Carbonsäureanhydridgruppe, wie Acrylsäure, Methacrylsäure, Maleinsäure, Fumarsäure, Maleinsäure- bzw. Fumarsäurehalbester, Itaconsäure oder Maleinsäureanhydrid.

Bevorzugte Monomere II sind $C_{10}$- bis $C_{18}$-Alkyl(meth)acrylate. Als besonders bevorzugte Monomere II genannte seien z.B. Lauryl(meth)acrylat und Stearyl(meth)acrylat.

Als Monomere III (Hauptmonomere) zu nennen sind z.B. (Meth)acrylsäurealkylester mit einem $C_1$-$C_9$-, insbesondere $C_1$-$C_8$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, $\alpha$- und p-Methylstyrol, $\alpha$-Butylstyrol, 4-n-Butylstyrol, 4-n-

2

Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren und Chloropren, sowie Ethylen, Propylen und Isobutylen genannt. Nicht aromatische Kohlenwasserstoffe mit zwei Doppelbindungen sind weniger bevorzugte Hauptmonomere zur Herstellung des Schutzkolloids.

Die Hauptmonomeren werden auch vorzugsweise im Gemisch eingesetzt.

Vinylaromatische Verbindungen wie Styrol werden z.B. häufig im Gemisch mit $C_1$-$C_{20}$-Alkyl(meth)acrylaten, insbesondere mit $C_1$-$C_8$-Alkyl(meth)acrylaten eingesetzt.

Besonders bevorzugt sind Alkyl(meth)acrylate, Styrol und deren Gemische als Monomere III.

Weitere ethylenisch ungesättigte Monomere (Monomere IV) sind insbesondere Hydroxylgruppen enthaltende Monomere wie Hydroxyalkyl(meth)acrylate, z.B. Hydroxyropyl- oder Hydroxyethyl(meth)acrylat. Vernetzende Monomere, z.B. mit zwei Vinylgruppen können zwar auch mitverwendet werden, vorzugsweise enthält das Schutzkolloid jedoch keine vernetzenden Monomeren oder allenfalls nur geringe Anteile dieser Monomeren, z.B. unter 0,2 Gew.-%, bezogen auf das Schutzkolloid.

Polymere mit einem Gehalt an Hydroxylgruppen können z.B. mit Melaminharzen oder Polyisocyanaten, insbesondere wasseremulgierbaren Polyisocyanaten, vernetzt werden. Der Gehalt der Hydroxylgruppen enthaltenden Monomere wird vorzugsweise so gewählt, daß die OH-Zahl des Polymeren 0 bis 200, besonders bevorzugt 0 bis 150, ganz besonders bevorzugt 0 bis 100 und insbesondere 0 bis 30 mg KOH/g Polymer (DIN 53 240) beträgt. Des weiteren kann das Polymer z.B. auch einen Gehalt an Monomeren mit Carbonylgruppen aufweisen und so z.B. mit Polyhydraziden vernetzbar sein.

Das gewichtsmittlere Molekulargewicht ($M_w$) des polymeren Schutzkolloids liegt vorzugsweise über 50.000, besonders bevorzugt beträgt es über 50.000 bis 200.000 und ganz besonders bevorzugt 70.000 bis 120.000 (bestimmt durch Gelpermeationschromatographie, mit Polystyrol als Standard und Tetrahydrofuran als Elutionsmittel).

Die Herstellung des polymeren Schutzkolloids kann z.B. durch Substanzpolymerisation, also lösungsmittelfrei oder vorzugsweise durch Lösungspolymerisation erfolgen.

Als Lösungsmittel eignen sich z.B. solche mit einem Siedepunkt unter 100°C bei 1 bar oder solche, die mit Wasser ein Azeotrop bilden, welche aus der wäßrigen Polymerdispersion, soweit gewünscht, leicht destillativ abgetrennt werden können. Als Lösungsmittel können günstigerweise auch sogenannte Filmbildehilfsmittel, wie Butylglycol, Butyldigylcol oder Butoxypropanol verwendet werden. Ein späterer Zusatz dieser Hilfsmittel kann sich so erübrigen.

Als Lösungsmittel genannt seien z.B. Butanol, Isobutanol, Propanol, Ethanol, Methanol und Methylethylketon.

Die Polymerisation der ethylenisch ungesättigten Monomeren kann z.B. in bekannter Weise durch anionische oder vorzugsweise radikalische Polymerisation vorzugsweise in Gegenwart von Initiatoren erfolgen. Als radikalbildende Initiatoren genannt seien z.B. Azobiscarbonsäureamide., Azobiscarbonsäurenitrile, Persäureester oder Peroxide. Die Menge des Initiators beträgt vorzugsweise 0,2 bis 5, besonders bevorzugt 0,5 bis 3 Gew.-%, bezogen auf die Monomeren. Die Polymerisationstemperatur beträgt vorzugsweise 50 bis 150°C, besonders bevorzugt 80 bis 130°C. Gegebenenfalls können auch Regler, z.B. Mercaptoethanol, Tertiärdodecylmercaptan oder Diisopropylxanthogensulfid, vorzugsweise in Mengen von 0 bis 3 Gew.-%, bezogen auf die Monomeren, zugesetzt werden.

Die Herstellung des polymeren Schutzkolloids erfolgt einstufig.

Bei der Polymerisation können die Monomeren vorgelegt oder auch (bevorzugt) kontinuierlich zudosiert werden.

Nach Herstellung des polymeren Schutzkolloids wird eine Dispersion oder vorzugsweise Lösung des polymeren Schutzkolloids in dem organischen Lösungsmittel erhalten. Der Feststoffgehalt beträgt vorzugsweise 50 bis 95, insbesondere 60 bis 85 Gew.-%.

Das polymere Schutzkolloid wird dann als Schutzkolloid bei der Emulsionspolymerisation verwendet.

Das polymere Schutzkolloid kann dazu in Wasser vorgelegt und/oder zusammen mit zu polymerisierenden Monomeren während der Emulsionspolymerisation dem Wasser zugesetzt werden.

Das Schutzkolloid kann in Form seiner organischen Lösung, z.B. im Falle der Lösungspolymerisation, oder auch lösemittelfrei, z.B. im Falle der Substanzpolymerisation, verwendet werden. Es kann aber auch zunächst in eine wäßrige Dispersion oder Lösung überführt werden, wobei Lösungsmittel gegebenenfalls abdestilliert wird.

Die Säuregruppen bzw. Anhydridgruppen des polymeren Schutzkolloids werden vor oder während der Überführung in die wäßrige Phase ganz oder teilweise in Salzgruppen überführt. Dazu eignen sich Ammoniak oder andere Aminoverbindungen, insbesondere tertiäre Aminoverbindungen, oder anorganische Basen, z.B. NaOH.

Soweit das Schutzkolloid nicht bereits in wäßriger Phase vorliegt und die Überführung in Salzgruppen dementsprechend bereits erfolgt ist, wird die Überführung in Salzgruppen vor oder während der Zugabe des Schutzkolloids zum Polymerisationansatz der Emulsionspolymerisation durchgeführt.

Der Gewichtsanteil des polymeren Schutzkolloids beträgt vorzugsweise 2 bis 40 Gew.-Teile, besonders bevorzugt 5 bis 25 Gew.-Teile, bezogen auf 100 Gew.-Teile des durch Emulsionspolymerisation erhaltenen Polymeren.

Bei der Emulsionspolymerisation werden keine weiteren Emulgatoren, Schutzkolloide oder sonstige Dispergierhilfsmittel mehr benötigt und daher vorzugsweise auch nicht eingesetzt.

Bei den zu polymerisierenden Monomeren handelt es sich im wesentlichen um die Bereits voranstehend genannten Monomere I bis IV, wobei als Monomere III auch aliphatische Kohlenwasserstoffe mit 2 bis 8 C-Atomen und zwei Doppelbindungen und als Monomere IV auch vernetzende Monomere, wie Butandioldiacrylat und Divinylbenzol geeignet sind.

Das durch Emulsionspolymerisation erhaltene Polymer besteht vorzugsweise zu 0 bis 100, besonders bevorzugt zu 40 bis 100 Gew.-% aus den Monomeren III (Hauptmonomere).

Monomere I und II können, müssen jedoch keinesfalls, mitverwendet werden, ihr Anteil liegt jedoch im allgemeinen jeweils unter 10 Gew.-%, bevorzugt unter 5 Gew.-% und besonders bevorzugt unter 3 Gew.-%.

Weitere Monomere IV können ebenfalls mitverwendet werden. z.B. in Mengen von 0 bis 100 Gew.-%, bevorzugt 0 bis 60 Gew.-%. Die Gewichtsangaben sind auf das erhaltene Polymer bezogen.

Die Emulsionspolymerisation kann in üblicher Weise z.B. bei Temperaturen von 30 bis 95°C in Gegenwart eines wasserlöslichen Initiators durchgeführt werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Im Falle von Wasserstoffperoxid als Initiator werden vorzugsweise geringe Mengen Cu(II) oder Fe(III) als Katalysator mitverwendet.

Die nach der Emulsionspolymerisation erhaltene erfindungsgemäße wäßrige Polymerdispersion hat vorzugsweise einen Feststoffgehalt von 10 bis 65, vorzugsweise von 30 bis 60, und besonders bevorzugt von 40 bis 55 Gew.-%.

Die erfindungsgemäßen wäßrigen Dispersionen eignen sich als Beschichtungsmittel, Imprägnierungsmittel oder Klebstoffe. Sie können für die jeweilige Verwendung übliche Zusatzstoffe enthalten, z.B. Entschäumer, Verlaufsmittel, Pigmente, Füllstoffe oder Farbstoffe, Verdickungsmittel etc.

Sie können als Beschichtungsmittel z.B zur Beschichtung von Substanzen z.B. aus Metall, Holz, Stein, Papier oder Kunststoff, als Vliesstoffbindemittel zum Imprägnieren bzw. Binden von gewebten und ungewebten Fasern oder zum Verkleben unterschiedlichster Substanzen verwendet werden. Sie eignen sich z.B. auch als Bindemittel für wäßrige Druckfarben oder für Überdrucklacke.

Die erfindungsgemäßen Dispersionen enthalten wenig Koagulat und weisen im Vergleich zu anderen polymeren Schutzkolloiden feinere disperse Teilchen auf.

Mit den Dispersionen hergestellte Beschichtungen, Imprägnierungen oder Verklebungen haben eine hohe Wasserfestigkeit, d.h. geringe Wasseraufnahme, einen guten Glanz und weitere gute anwendungstechnische Eigenschaften.

Beispiele

A) Herstellung der polymeren Schutzkolloide durch Lösungspolymerisation

In einen Glaskolben, der mit Rückflußkühler, Ankerrührer, 2 Tropftrichtern und thermostatisiertem Ölbad ausgestattet war, wurde die Vorlage in einer Stickstoffatmosphäre unter Rühren auf eine Temperatur von 105°C aufgeheizt. Nach Erreichen der Temperatur wurde Zulauf 2 gestartet und innerhalb von 6 Stunden zudosiert. 15 min nach Start von Zulauf 2 wurde Zulauf 1 gestartet und innerhalb von 4 Stunden zudosiert. Dann wurde die Polymerlösung auf 80°C abgekühlt und mit Zulauf 3 innerhalb von 15 min neutralisiert. Anschließend wurde noch 15 min weitergerührt. Dann wurde die Polymerlösung durch Einrühren von 2 kg Wasser innerhalb von 1 Stunde dispergiert. Die Zusammensetzungen und Kenndaten sind in Tabelle 1 bzw. 2 angegeben.

Tabelle 1

| Herstellung der wäßrigen Schutzkolloide mit Laurylacrylat, Mengenangaben in Gramm (erfindungsgemäß) | | | | |
|---|---|---|---|---|
| | 1 | 2 | 3 | 4 |
| Vorlage: | | | | |
| Z1 | 180 | 180 | 180 | 180 |
| IBO | 170 | - | 170 | - |
| BDG | - | 170 | - | - |
| BG | - | - | - | 170 |
| | | | | |
| Zulauf 1: | | | | |
| Acrylsäure | 200 | 200 | 200 | 200 |
| Laurylacrylat | 200 | 200 | 200 | 200 |
| n-Butylacrylat | 200 | 300 | 200 | 200 |
| Styrol | 400 | 300 | 350 | 400 |
| Diacetonacrylamid | - | - | 50 | - |
| | | | | |
| Zulauf 2: | | | | |
| t.-BPO | 20 | 20 | 20 | 20 |
| IBO | 240 | - | 230 | - |
| BDG | - | 240 | - | - |
| BG | - | - | - | 130 |
| | | | | |
| Zulauf 3: | | | | |
| $NH_3$ (25 %) | 189 | - | 189 | 192 |
| NaOH (25 %) | - | 445 | - | - |
| | | | | |
| Kenndaten: | | | | |
| FG (%) | 28,4 | 29,7 | 28,2 | 26,2 |
| pH | 8,5 | 7,9 | 7,2 | 7,9 |
| Lösemittel (%) | 11,3 | 10,6 | 11,1 | 8,5 |
| LD-Wert | 99 | 98 | 98 | 96 |
| Visk. (mPa·s) | pastös | pastös | pastös | 35.000 |

Tabelle 2

| Herstellung der wäßrigen Schutzkolloid-Dispersionen bzw. -lösungen ohne Laurylacrylat (zum Vergleich), Mengenangaben in Gramm | | | | |
|---|---|---|---|---|
| | 5 | 6 | 7 | 8 |
| Vorlage: | | | | |
| Z1 | 180 | 180 | 180 | 180 |
| IBO | 170 | 170 | - | - |
| BDG | - | - | - | 170 |
| BG | - | - | 170 | - |
| | | | | |
| Zulauf 1: | | | | |
| Acrylsäure | 200 | 200 | 200 | 200 |
| n-Butylacrylat | 300 | 400 | 300 | 400 |
| Styrol | 500 | 400 | 500 | 400 |
| | | | | |
| Zulauf 2: | | | | |
| t.-BPO | 20 | 20 | 20 | 20 |
| IBO | 240 | 240 | - | - |
| BDG | - | - | - | 240 |
| BG | - | - | 180 | - |
| | | | | |
| Zulauf 3: | | | | |
| NH$_3$ (25 %) | 189 | 189 | 192 | - |
| NaOH (25 %) | - | - | - | 445 |
| | | | | |
| Kenndaten: | | | | |
| FG (%) | 27,8 | 28,0 | 27,7 | 29,0 |
| pH | 7,7 | 7,9 | 7,7 | 7,5 |
| Lösemittel (%) | 11,3 | 11,3 | 9,9 | 11,3 |
| LD | | 100 | 96 | 99 |
| Visk. (mPa·s) | pastös | 16.000 | pastös | pastös |
| Abkürzungen:<br>t-BPO: tertiär Butylperoctoat<br>IBO: Isobutanol<br>BDG: Butyldiglycol<br>BG: Butylglycol<br>FG: Festgehalt<br>LD-Wert: Trübung der Dispersion oder Lösung mit 0,01 Gew.-% Polymergehalt im Verhältnis zu Wasser, bestimmt durch Messung des Photostroms. Der Wert gibt die Lichtdurchlässigkeit in % an (je größer der LD-Wert, desto kleiner die Polymerteilchen) | | | | |

B) Emulsionspolymerisation

Fahrweise A:

Die Vorlage wurde auf 85°C unter Rühren in einer Stickstoffatmosphäre aufgeheizt. Dabei wurde Zulauf 1 zudosiert. Dann wurden 17 g von Zulauf 3 zugegeben. Anschließend wurde Zulauf 2 in 2 Stunden und der Rest von Zulauf 3 in 2,5 Stunden zudosiert. Anschließend wurde noch 1 Stunde lang bei 85°C weitergerührt und dann auf Raumtemperatur abgekühlt.

Fahrweise B:

Die Vorlage wurde auf 85°C unter Rühren in einer Stickstoffatmosphäre aufgeheizt. Dann wurde Zulauf 1 in 90 min und Zulauf 2 in 120 min zudosiert. Danach wurde noch 1 Stunde lang bei 85°C weitergerührt und dann auf Raumtemperatur abgekühlt.

Die Zusammensetzungen und Kenndaten sind in Tabellen 3 bis 6 angegeben.

Tabelle 3

| Herstellung emulgatorfreier Dispersionen mit den oben beschriebenen Schutzkolloiden (Initiator = Wasserstoffperoxid/Cu), Fahrweise A (Mengenangaben in Gramm) | | | | |
|---|---|---|---|---|
| Dispersion | a | b' | c' | d |
| | | | | |
| Vorlage: | | | | |
| Schutzkolloid | 1 | 5 | 6 | 3 |
| Menge (fest) | 352,1 | 359,7 | 357,1 | 354,6 |
| | | | | |
| Zulauf 1: | | | | |
| Wasser | 800 | 800 | 800 | 800 |
| $CuSo_4x5H_2O$ | 0,02 | 0,02 | 0,02 | 0,02 |
| | | | | |
| Zulauf 2: | | | | |
| Styrol | 465 | 465 | 465 | 465 |
| n-Butylacrylat | 385 | 385 | 385 | 385 |
| Butandioldiacrylat | 50 | 50 | 50 | 50 |
| | | | | |
| Zulauf 3: | | | | |
| $H_2O_2$ (12 %ig) | 83 | 83 | 83 | 83 |
| | | | | |
| Kenndaten: | | | | |
| FG (%) | 46,6 | koag.* | koag.* | 47,1 |
| pH | 8,0 | | | 7,6 |
| IBO (%) | 1,5 | | | 2,1 |
| **LD** | **69** | | | **51** |
| Visk. (mPa • s) | 270 | | | 460 |
| Koagulat | kein | | | kein |

\* koag.: Dispersion ist während der Herstellung koaguliert

Der Vergleich von Dispersion a oder d mit b' und c' zeigt, daß nur mit dem Schutzkolloid, das Laurylacrylat enthält, eine stabile Dispersion der angegebenen Zusammensetzung herstellbar ist.

Tabelle 4

| Herstellung emulgatorfreier Dispersionen mit den oben beschriebenen Schutzkolloiden (Initiator = Wasserstoffperoxid/Cu), Fahrweise A (Mengenangaben in Gramm) | | | | |
|---|---|---|---|---|
| Dispersion | e | f' | g | h' |
| | | | | |
| Vorlage: | | | | |
| Schutzkolloid | 1 | 5 | 4 | 7 |
| Menge (fest) | 352,1 | 359,7 | 382 | 361 |
| | | | | |
| Zulauf 1: | | | | |
| Wasser | 800 | 800 | 800 | 800 |
| $CuSO_4x5H_2O$ | 0,02 | 0,02 | 0,02 | 0,02 |
| | | | | |
| Zulauf 2: | | | | |
| Styrol | 465 | 465 | 900 | 900 |
| Butylacrylat | 435 | 435 | - | - |
| Butandioldiacrylat | - | - | - | - |
| | | | | |
| Zulauf 3: | | | | |
| $H_2O_2$ (12 %ig) | - | - | 83 | 83 |
| $H_2O_2$ (6 %ig) | 83 | 83 | - | - |
| | | | | |
| Kenndaten: | | | | |
| FG (%) | 46,2 | 46,6 | 47,8 | 46,6 |
| pH | 8,3 | 8,2 | 8,3 | 8,0 |
| IBO (%) | 1,9 | 1,5 | - | - |
| BG (%) | - | - | 1,5 | 1,7 |
| **LD** | **62** | **38** | **33** | **11** |
| Visk. (mPa·s) | 390 | 230 | 200 | 180 |
| Koagulat | kein | kein | kein | **viel** |

Der Vergleich von Dispersion e mit f' und g mit h' zeigt, daß bei Einbau von Laurylacrylat in das Schutzkolloid feinteiligere Dispersionen erhalten werden. Im Falle von Dispersion h' wird außerdem ohne Laurylacrylat viel Koagulat erhalten.

Tabelle 5

| Herstellung emulgatorfreier Dispersionen mit den oben beschriebenen Schutzkolloiden (Initiator = t.-BHP, Rongalit C), Fahrweise B (Mengenangaben in Gramm) | | | |
|---|---|---|---|
| Dispersion | i | k | l' | m' |
| | | | | |
| Vorlage: | | | | |
| Schutzkolloid | 2 | 2 | 8 | 8 |
| Menge | 84 | 84 | 86 | 86 |
| | | | | |
| t-BHP (70 %ig) [1] | 3,6 | 3,6 | 3,6 | 3,6[1] |
| Wasser | 254 | 254 | 252 | 252 |
| | | | | |
| Zulauf 1: | | | | |
| n-Butylacrylat | 125 | 137,5 | 125 | 137,5 |
| Methylmethacrylat | 125 | - | 125 | - |
| Styrol | - | 112,5 | - | 112,5 |
| | | | | |
| Zulauf 2: | | | | |
| Rongalit C | 2,5 | 2,5 | 2,5 | 2,5 |
| Wasser | 100 | 100 | 100 | 100 |
| | | | | |
| Koagulat (K) | kein K | kein K | viel K | viel K |
| FG (%) | 39,0 | 38,2 | 38,3 | 36,8[2] |
| LD | 27 | 17 | 15 | |

[1] in Wasser
[2] nicht auspolymerisiert!

Vergleich Dispersion i mit l': Die Dispersion l', die mit dem Schutzkolloid hergestellt wurde, das kein Laurylacrylat enthält, ist grobteiliger (LD kleiner) und enthält sehr viel Koagulat.

Vergleich Dispersion k mit m': Die Dispersion m' (ohne Laurylacrylat) ist nicht vollständig auspolymerisiert und enthält sehr viel Koagulat.

Tabelle 6

| Herstellung emulgatorfreier Dispersionen mit den oben beschriebenen Schutzkolloiden (Initiator = Wasserstoffperoxid/Cu), Fahrweise B (Mengenangaben in Gramm) | | | | |
|---|---|---|---|---|
| Dispersion | n | o | p' | r' |
| | | | | |
| Vorlage: | | | | |
| Schutzkolloid | 2 | 2 | 8 | 8 |
| Menge | 84 | 84 | 86 | 86 |
| | | | | |
| $CuSo_4 x 5H_2O$ | 0,005 | 0,005 | 0,005 | 0,005 |
| Wasser | 249 | 249 | 247 | 247 |
| | | | | |
| Zulauf 1: | | | | |
| n-Butylacrylat | 125 | 137,5 | 125 | 137,5 |
| Methylmethacrylat | 125 | - | 125 | - |
| Styrol | - | 112,5 | - | 112,5 |
| | | | | |
| Zulauf 2: | | | | |
| $H_2O_2$ (30 %ig) | 4,2 | 4,2 | 4,2 | 4,2 |
| Wasser | 100 | 100 | 100 | 100 |
| | | | | |
| FG (%) | 37,5 | 37,5 | 35,8 | 37,2 |
| LD | 41 | 26 | 12 | 7 |
| | | | | |
| Glanz [2] | | | | |
| 20° | 61 | 68 | 13 | 26 |
| 60° | 80 | 87 | 48 | 67 |
| | | | | |
| Wasseraufnahme[1] | 18,9 | 34,0 | 29,6 | 43,8 |

[1] Gemessen nach 24 Stunden Lagerung von hergestellten Filmen in Wasser in Gew.-%

[2] Gemessen an hergestellten Filmen im angegebenen Winkel

Vergleich Dispersion n mit p' und o mit r': Der Einbau von Laurylacrylat bewirkt kleinere Teilchengrößen (höherer LD-Wert), einen besseren Glanz und eine niedrigere Wasseraufnahme.

**Patentansprüche**

1. Wäßrige Polymerdispersion, erhältlich durch radikalische Polymerisation von Monomeren in wäßriger Emulsion in Gegenwart eines einstufig hergestellten, einzelnen polymeren Schutzkolloids mit einem gewichtsmittleren Moleku-largewicht $\overline{M}_w$ über 20.000, wobei das Schutzkolloid aufgebaut ist aus:

- 5 bis 50 Gew.-% mindestens eines ethylenisch ungesättigten Monomeren mit mindestens einer Säure- oder Säureanhydridgruppe (Monomere I),

- 0,1 bis 80 Gew.-% mindestens eines (Meth)acrylsäureesters eines aliphatischen Alkohols mit mindestens 10 C-Atomen (Monomere II),

- 0 bis 94,9 Gew.-% sogenannter Hauptmonomere, ausgewählt aus $C_1$-$C_9$-Alkyl(meth)acrylaten, Vinylestern von bis zu 20 C-Atomen enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen (Monomere III) und

- 0 bis 60 Gew.-% weiterer Monomere (Monomere IV),
  und sich die Gewichtsangaben auf das polymere Schutzkolloid beziehen.

2. Wäßrige Polymerdispersion gemäß Anspruch 1, wobei es sich bei Monomeren II um $C_{10}$-$C_{18}$-Alkyl(meth)acrylate handelt.

3. Wäßrige Polymerdispersion gemäß Anspruch 1 oder 2, wobei der Anteil der Monomeren II 10 bis 30 Gew.-% beträgt.

4. Wäßrige Polymerdispersion gemäß einem der Ansprüche 1 bis 3, wobei der Anteil des polymeren Schutzkolloids 2 bis 40 Gew.-Teile, bezogen auf 100 Gew.-Teile des durch radikalische Polymerisation in wäßriger Emulsion erhaltenen Polymeren beträgt.

5. Verfahren zur Herstellung von wäßrigen Polymerdispersionen, dadurch gekennzeichnet, daß Monomere in wäßriger Emulsion in Gegenwart eines polymeren Schutzkolloids gemäß einem der Ansprüche 1 bis 4 radikalisch polymerisiert werden.

6. Verwendung des polymeren Schutzkolloids gemäß einem der Ansprüche 1 bis 3 als Schutzkolloid bei der Emulsionspolymerisation.

7. Verwendung von wäßrigen Polymerdispersionen gemäß einem der Ansprüche 1 bis 4 als oder in Beschichtungsmittel, Imprägnierungsmittel oder Klebstoffe.

## Claims

1. An aqueous polymer emulsion, obtainable by free radical polymerization of monomers in aqueous emulsion in the presence of an individual polymeric protective colloid which is prepared in one stage and has a weight average molecular weight $\overline{M}_w$ of more than 20,000, wherein the protective colloid is composed of:

- from 5 to 50% by weight of at least one ethylenically unsaturated monomer having at least one acid or anhydride group (monomers I),

- from 0.1 to 80% by weight of at least one (meth)acrylate of an aliphatic alcohol of at least 10 carbon atoms (monomers II),

- from 0 to 94.9% by weight of main monomers selected from the group consisting of $C_1$-$C_9$-alkyl (meth)acrylates, vinyl esters of carboxylic acids of up to 20 carbon atoms, vinyl aromatics of up to 20 carbon atoms, ethylenically unsaturated nitriles, vinyl halides and aliphatic hydrocarbons having 2 to 8 carbon atoms and 1 or 2 double bonds (monomers III) and

- from 0 to 60% by weight of further monomers (monomers IV)
  and the stated weights are based on the polymeric protective colloid.

2. An aqueous polymer emulsion as claimed in claim 1, wherein monomers II are $C_{10}$-$C_{18}$-alkyl (meth)acrylates.

3. An aqueous polymer emulsion as claimed in claim 1 or 2, wherein the amount of the monomers II is from 10 to 30% by weight.

4.  An aqueous polymer emulsion as claimed in any of claims 1 to 3, wherein the amount of the polymeric protective colloid is from 2 to 40 parts by weight, based on 100 parts by weight of the polymer obtained by free radical polymerization in aqueous emulsion.

5.  A process for the preparation of aqueous polymer emulsions, wherein monomers are subjected to free radical polymerization in aqueous emulsion in the presence of a polymeric protective colloid as claimed in any of claims 1 to 4.

6.  Use of a polymeric protective colloid as claimed in any of claims 1 to 3 as protective colloid in the emulsion polymerization.

7.  Use of aqueous polymer emulsions as claimed in any of claims 1 to 4 as or in coating materials, impregnating materials or adhesives.

**Revendications**

1.  Dispersions aqueuses de polymères obtenues par polymérisation radicalaire de monomères en émulsion aqueuse, en présence d'un seul colloïde protecteur polymère, préparé en une étape, ayant une masse moléculaire moyenne en poids $\overline{M}_w$ supérieure à 20 000, le colloïde protecteur étant construit à partir de :

    -   5 à 50 % en poids d'au moins un monomère à insaturation éthylénique ayant au moins un groupement acide ou anhydride d'acide (monomères I),
    -   0,1 à 80 % en poids d'au moins un (méth)acrylate d'un alcool aliphatique comportant au moins 10 atomes de carbone (monomères II),
    -   0 à 94,9% en poids d'un monomère principal, choisi parmi les (méth)acrylates d'alkyle en $C_1$-$C_9$, les esters vinyliques d'acides carboxyliques comportant jusqu'à 20 atomes de carbone, les composés vinylaromatiques comportant jusqu'à 20 atomes de carbone, les nitriles à insaturation éthylénique, les halogénures de vinyle et les hydrocarbures aliphatiques ayant de 2 à 8 atomes de carbone et 1 ou 2 doubles liaisons (monomères III) et
    -   0 à 60% en poids d'autres monomères (monomères IV),
        les pourcentages en poids se rapportant au colloïde protecteur polymère.

2.  Dispersions aqueuses de polymères selon la revendication 1, pour lesquelles les monomères II sont des (méth)acrylates d'alkyle en $C_{10}$-$C_{18}$.

3.  Dispersions aqueuses de polymères selon la revendication 1 ou 2, pour lesquelles la teneur en monomères II s'élève à 10-30% en poids.

4.  Dispersions aqueuses de polymères selon l'une quelconque des revendications 1 à 3, pour lesquelles la teneur du colloïde protecteur polymère s'élève à 2-40 parties en poids, par rapport aux 100 parties en poids du polymère obtenu par polymérisation radicalaire en émulsion aqueuse.

5.  Procédé de préparation de dispersions aqueuses de polymères, caractérisé en ce que l'on polymérise de façon radicalaire des monomères en émulsion aqueuse en présence d'un colloïde protecteur polymère selon l'une quelconque des revendications 1 à 4.

6.  Utilisation du colloïde protecteur polymère selon l'une quelconque des revendications 1 à 3 en tant que colloïde protecteur lors de polymérisations en émulsion.

7.  Utilisation de dispersions aqueuses de polymères selon l'une quelconque des revendications 1 à 4, en tant que ou dans des agents de revêtements, des agents d'imprégnation ou des adhésifs.